Europäisches Patentamt

European Patent Office

Office européen des brevets

(11) Publication number: **0 659 469 A2**

# EUROPEAN PATENT APPLICATION

(21) Application number: 94309016.7

(51) Int. Cl.6: **B01D 71/02**, B01D 61/36

(22) Date of filing: 05.12.94

(30) Priority: 27.12.93 JP 331141/93

(43) Date of publication of application:
28.06.95 Bulletin 95/26

(84) Designated Contracting States:
CH DE FR GB IT LI NL

(71) Applicant: **MITSUI ENGINEERING & SHIPBUILDING CO., LTD**
6-4 Tsukiji 5-chome, Chuo-ku
Tokyo (JP)

(72) Inventor: **Okamoto, Kenichi**

2-11-9 Minamikobayama-Cho
Ube-Shi,
Yamaguchi (JP)
Inventor: **Kita, Hidetoshi**
2-6-5 Higashikobayama-Cho
Ube-Shi,
Yamaguchi (JP)

(74) Representative: **Jenkins, Peter David et al**
PAGE WHITE & FARRER
54 Doughty Street
London WC1N 2LS (GB)

(54) **Membrane for liquid mixture separation.**

(57) A membrane for liquid mixture separation which is composed of an A-type zeolite film deposited on a porous support.

FIG.1

The present invention relates to a membrane for liquid mixture separation to be used in the pervaporation or vapor permeation method.

Over the past years, a great deal of research has been devoted to separating liquid mixture using the pervaporation or vapor permeation technique through non-porous polymeric membranes. This separation process can be applied successfully to mixtures that are difficult to separate by more conventional techniques, such as is the case for azeotropic mixtures or mixtures of liquids with very small differences in vapor pressures. For example, studied the separation of an azeotropic mixture through polyvinyl alcohol membrane.( U.S. Patent No. 2953502) Recently, the separation of water-formaldehyde mixture thorugh styrene-acrylic acid copolymer membrane has been reported. (U.S. Patent No.4035291). These membranes, however, have not been put to practical use because of not enough the permeation rates or insufficient separating factors.

Under these circumstances, the pervaporation and vapor permeation are one of the more recently recognized separation processes. They are regarded as a promising separation process which will supplement or supersede the distillation. It is considered that they are especially suitable for the separation of water-ethanol azeotrope. Therefore, active research and development works have been performed on these methods and some practical membranes for them have been proposed. For example, a cellulos membrane and a polyvinyl alcohol membrane are disclosed in Japanese Patent Laid-open No. 109204/1984 and a cross-linked polyethyleneimine membrane is disclosed in Japanese Patent Laid-open No. 55305/1984. However, these membranes disclosed so far are not of practical use because of insufficient separating factors or not enough permeating rates to similar physical propaties, as in the case of water and methanol. In addition, they show insufficient resistance to organic solvents such as DMF and (N,N-dimethylformamide). These shortcomings restrict their use to the separation of water from limited substances, such as alcohols and ketones having three or more carbon atoms.

It is an aim of the present invention to provide a membrane with sufficient permeation rates and separating factors for liquid mixture separation to be used in the pervaporation or vapor permeation. They are free from the above-mentioned shortcomings of conventional membranes and capable of separating liquid mixture very efficiently with stable high permeation rates.

According to the present invention, the membrane for liquid mixture separation is composed of an A-type zeolite film on a porous support.

Because of its molecular sieve action, zeolite is expected to be used as a membrane for liquid mixture separation. A practical commercial membrane with sufficient strength, chemical stability, and handling properties has been realized by forming a membrane of A-type zeolite on a porous support according to the present invention.

The membrane for liquid mixture separation as defined in the present invention permits with high selectivity of water permeation on account of the molecular sieve action of zeolite. Therefore, it permits the stable, efficient separation of water-methanol mixture which has been difficult to separate using the conventional membrane.

According to the present invention, A-type zeolite is employed although zeolite is available in several types, such as A-type, X-type, and Y-type, because it exhibits high molecular sieve action and separation selectivity and can be synthesized by hydrothermal process at low temperatures without requiring complex reactors such as autoclaves, as demonstrated in Examples mentioned later.

Preferred embodiments of the present invention will now be described by way of example only with reference to the accompanying drawings, in which:

Fig. 1 shows X-ray diffraction patterns of porous alumina support, zeolite film formed thereon, and zeolite 4A used in Example 1.

Fig. 2 is a SEM photograph showing the crystalline structure of the surface of the alumina support used in Example 1.

Fig. 3 is a SEM photograph showing the crystalline structure of the surface of the zeolite film prepared in Example 1.

Fig. 4 is a schematic diagram showing the measuring apparatus used in Examples 5 and 6.

According to the present invention, the membrane for liquid mixture separation is composed of a porous support and A-type zeolite deposited thereon. The porous support is made of ceramics (such as alumina, silica, zirconia, silicon nitride, silicon carbide etc.), metals (such as aluminum, silver, stainless steel etc.), or organic polymers (such as polyethylene, polypropylene, polytetrafluoroethylene, polysulfone, polyimide etc.). It should preferably have an average pore diameter of 0.05-10 $\mu$m and a porosity of 10-60%. With an average pore diameter not greater than 0.05 $\mu$m, it will be unpractically in insufficient rates permeation. With an average pore diameter not smaller than 10 $\mu$m, it will be in insufifcient separating factor. With a porosity not greater than 10%, it will be in insufficient permeation rates. With a porosity not smaller than 60%, it will be low separatig factor in selectivity and strength of material. A preferred porous support is that of alumina which has an average pore diameter of 0.1-2 $\mu$m, and a porosity of 30-50%.

No restrictions are imposed on the shape of the porous support; however, the one used for the pervaporation or vapor permeation should be in the form of pipe, 20-100 cm long, about 10 mm in outside diameter, and 0.2 mm to several mm in thickness, or in the form of cylinder, 20-100 cm long, 30-100 mm in outside diameter, and 0.2 mm to several mm in thickness, having a plurality of holes, 2-12 mm in inside diameters, arranged parallel in the axial direction.

On this porous support is synthesized A-type zeolite film by the hydrothermal method or vapor phase method, which employs as the starting materials sodium silicate, silica gel or sol, or silica powder (as the silica source) and sodium aluminate or aluminum hydroxide (as the alumina source).

The hydrothermal method for A-type zeolite film formation should preferably be carried out at 60-150°C for 1-24 hours once or repeatedly (1-5 times). The reaction system should preferably be incorporated with seed crystals for A-type zeolite by, for example, embedding them in the porous support.

The molar ratio of components of the starting material should be as follows:

$H_2O/Na_2O$ = 20-300, preferably 60

$Na_2O/SiO_2$ = 0.3-2, preferably 1

$SiO_2/Al_2O_3$ = 2-6, preferably 2

The A-type zeolite film should be formed on both sides of the porous support, such that the film thickness is 10-50 $\mu$m and the total thickness of the membrane (including the support) is 0.5-2 mm. In this way there is obtained the membrane for liquid mixture separation according to the present invention.

The thus obtained membrane can be used water removal from liquid mixture in the pervaporation or vapor permeation.

The membrane of the present invention may be used to separate water from liquid mixture, as alcohols, (such as methanol, ethanol, and propanol), ketones (such as acetone and methyl ethyl ketone), halogenated hydrocarbons (such as carbon tetrachloride and trichloroethylene), and their mixture composed of two or more components.

The liquid mixtures to which the membrane of the present invention can be applied with high selectivity are those of water with organic liquid, especially water-methanol and water-ethanol mixtures.

The membrane for liquid mixture separation as mentioned above exhibits high separating factor and permeation rates with high chemical stability and good handling properties when applied to liquid mixture separation by the pervaporation or vapor permeation.

With the membrane for liquid mixture separation as defined in the present invention, it is possible to separate water from its mixture with high separation factor and permeating rates than with the conventional membrane. Thus it finds use as a membrane reactor in the energy-saving, compact pervaporation or vapor permeation membrane separator for chemical reaction or solvent purification.

To further illustrate the invention, and not by way of limitation, the following examples are given.

Example 1 (Synthesis)

An aqueous solution of sodium silicate and an aqueous solution of sodium hydroxide/aluminum hydroxide mixture were placed in a cylindrical glass container, with their molar ratios being as follows.

$H_2O/Na_2O$ = 60

$Na_2O/SiO_2$ = 1

$SiO_2/Al_2O_3$ = 2

In the solution was immersed a tubular porous alumina support whose surface had been provided with crystal seeds. The support is "Multipoaron" made by Mitsui Kensaku-Toishi Co., Ltd., measuring 1 cm in outside diameter, 20 cm long, 1 mm thick, 1 $\mu$m in pore diameter, and 40% porosity. Hydrothermal synthesis was carried out at 100°C for 3 hours, followed by rinsing and drying at 70 °C. Thus there was obtained a membrane for liquid mixture separation which had a total thickness of about 1.05 mm.

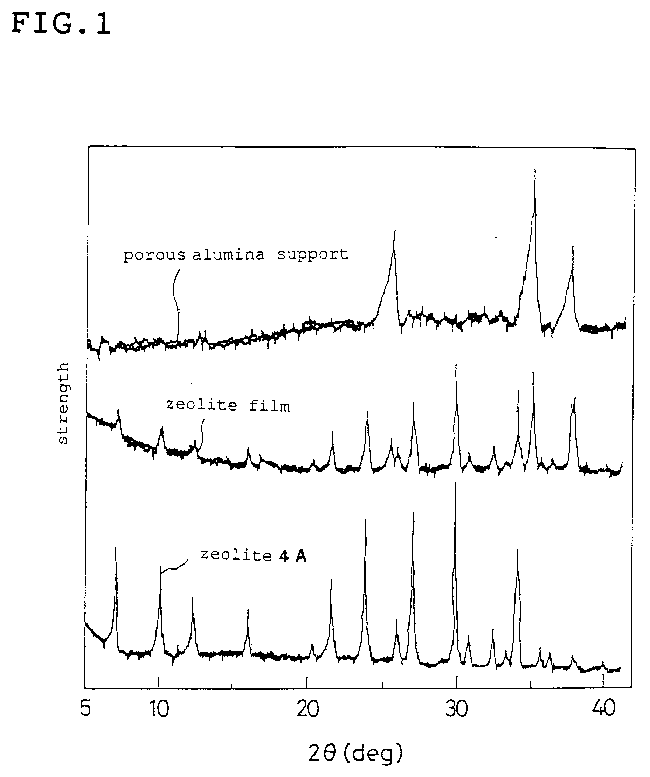

The zeolite film formed as mentioned above was examined by X-ray diffraction. The X-ray diffraction pattern is shown in Fig. 1, together with those of the alumina support and commercial zeolite 4A. It is noted that the X-ray pattern of the zeolite film coincides well with that of commercial zeolite 4A. This indicates that A-type zeolite had formed on the surface of the support.

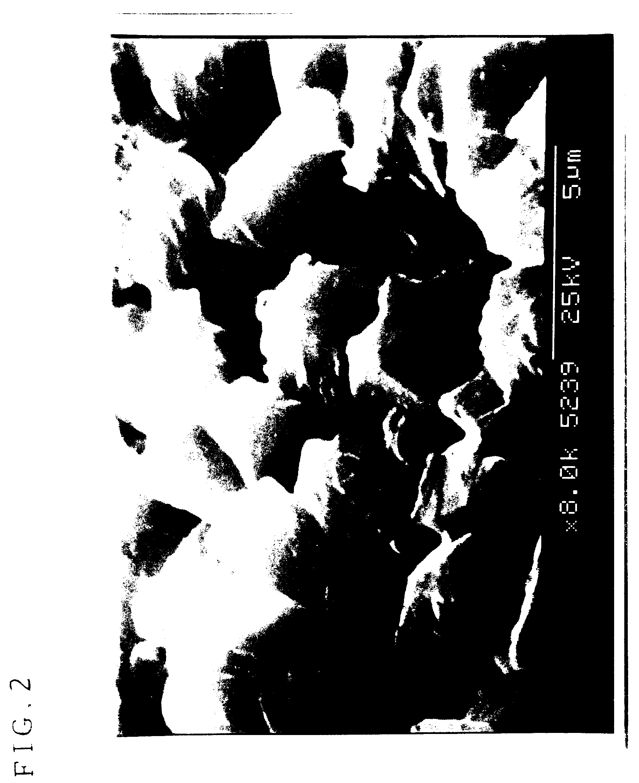

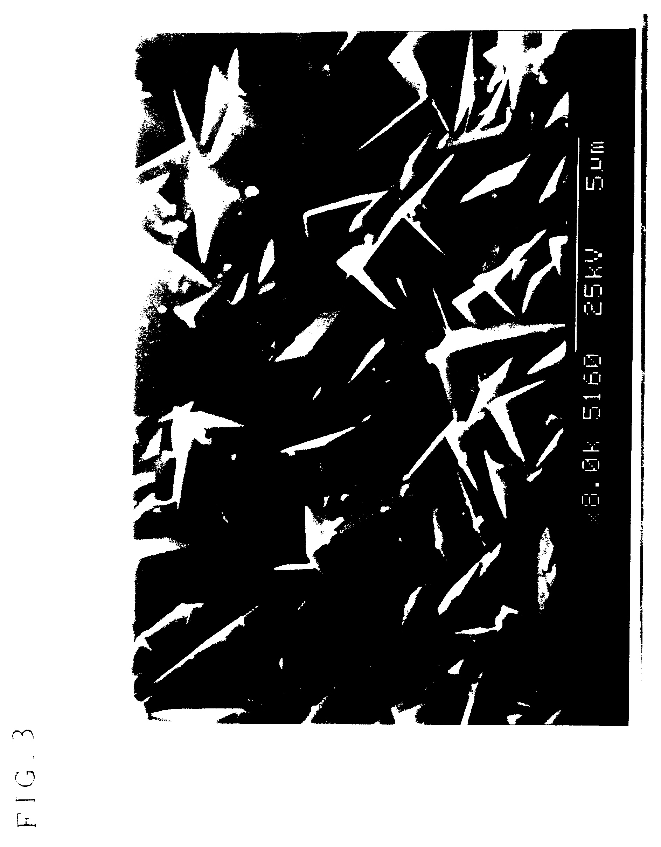

A SEM photograph of the surface of the alumina support is shown in Fig. 2. A SEM photograph of the zeolite film is shown in Fig. 3. It is noted that the alumina support has pores of about 1 $\mu$m in diameter, whereas zeolite polycrystals (about 3 $\mu$m in diameter) had densely formed on the alumina support.

Example 2 (Synthesis)

An aqueous solution of sodium silicate and an aqueous solution of sodium aluminate were placed in a cylindrical glass container, with their molar ratios being as follows.

$H_2O/Na_2O = 60$

$Na_2O/SiO_2 = 1$

$SiO_2/Al_2O_3 = 2$

In the solution was immersed a tubular porous alumina support (the same one as used in Example 1) whose surface had been provided with crystal seeds. Hydrothermal synthesis was carried out at 100 °C for 12 hours. Thus there was obtained a membrane for liquid mixture separation which had a total thickness of about 1.1 mm.

The zeolite film gave an X-ray diffraction pattern which coincides with that of commercial zeolite 4A. This indicates that A-type zeolite had formed on the surface of the support.

Example 3 (Synthesis)

An aqueous solution of sodium silicate and an aqueous solution of sodium hydroxide/aluminum hydroxide mixture were placed in a cylindrical glass container, with their molar ratios being as follows.

$H_2O/Na_2O = 60$

$Na_2O/SiO_2 = 1$

$SiO_2/Al_2O_3 = 2$

In the solution was immersed a tubular porous alumina support (the same one as used in Example 1) whose surface had not been provided with crystal seeds. Hydrothermal synthesis was carried out at 100°C for 3 hours. The process of hydrothermal synthesis was repeated four times. In this way a zeolite film was formed on the alumina support. Thus there was obtained a membrane for liquid mixture separation which had a total thickness of about 1.1 mm.

The zeolite film gave an X-ray diffraction pattern which coincides with that of commercial zeolite 4A. This indicates that A-type zeolite had formed on the surface of the support.

Example 4 (Synthesis)

An aqueous solution of sodium silicate and an aqueous solution of sodium hydroxide/aluminum hydroxide mixture were placed in a cylindrical glass container, with their molar ratios being as follows.

$H_2O/Na_2O = 100$

$Na_2O/SiO_2 = 1$

$SiO_2/Al_2O3_3 = 2$

In the solution was immersed a tubular porous alumina support (the same one as used in Example 1) whose surface had not been provided with crystal seeds. Hydrothermal synthesis was carried out at 100°C for 5 hours. The process of hydrothermal synthesis was repeated four times. In this way a zeolite film was formed on the alumina support. Thus there was obtained a membrane for liquid mixture separation which had a total thickness of about 1.05 mm.

The zeolite film gave an X-ray diffraction pattern which coincides with that of commercial zeolite 4A. This indicates that A-type zeolite had formed on the surface of the support.

Example 5 (Application)

The membrane for liquid mixture separation obtained in Example 1 was used for separation of water-ethanol mixture by the pervaporation method or vapor permeation.

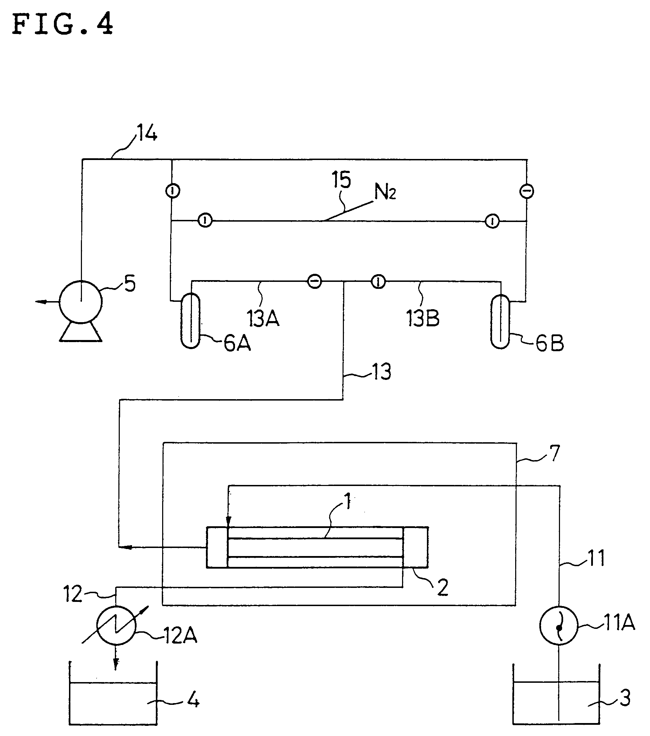

The apparatus for the pervaporation or vapor permanation is shown in Fig. 4. The feed solution (3) comes into the cell (2) through the pipe (11) equipped with the pump (11A). The cell (2) is provided with the membrane (1) for liquid mixture separation. After separation, the product solution (4) is discharged through the pipe (12) equipped with the heat exchanger (12A). The permeate side of the membrane (1) is evacuated to 0.1 Torr by the vacuum pump (5) through the pipes (13, 13A, 13B, and 14). The permeate vapor is cooled by liquefied nitrogen and collected in the trap (6). Gaseous nitrogen is discharged through the pipe (15).

The cell (2) is installed in the thermostat (7) which is regulated at the treating temperature as shown in Table 1.

The membrane (1) for liquid mixture separation has an effective surface area of 47 cm2. The feed solution was fed at a flow rate of 12-30 cm3/min.

The composition of the solution was analyzed by gas chromatography. The membrane performance was evaluated permeation rate in terms of unit area, total permeation flux per unit time (Q kg/m2•h ), and separation factor ( $\alpha$ ). The last was calculated from the following formula.

$$\alpha = \frac{P_{ph}/P_w}{F_{ph}/F_w}$$

where $F_{ph}$ and $F_w$ respectively represent the average concentration (wt%) of organic solution and water in the feed one, and $P_{ph}$ and $P_w$ respectively represent the average concentration (wt%) of organic solution and water in the permeated one.

Table 1 shows the feed solution temperature, water concentration in feed solution, total permeation flux (Q), and separation factor ( $\alpha$ ).

For comparison, published data of GFT film (crosslinked polyvinyl alcohol), PAA (polyacrylic acid)-/polyion film, xanthone film, polyimide film, and polyimide asym film (PMDA-ODA polyimide) are also shown in Table 1.

It is apparent from Table 1 that the membrane for liquid mixture separation of the present invention lets water permeate more selectively than the conventional one and thus it permits efficient separation of water-ethanol mixture.

Table 1

| Membrane for separation | Feed temperature (°C) | Water concentration in feed solution (wt%) | Q (kg/m² ·h) | α (no dimension) | Remarks |
|---|---|---|---|---|---|
| A-type zeolite film | 75 | 10 | 2.15 | >10000 | Example |
| | 75 | 5 | 1.10 | >10000 | |
| | 50 | 10 | 0.71 | >10000 | |
| GFT film | 80 | 5 | 0.01 | 9500 | Comparative Example |
| PAA/Polyion film | 60 | 5 | 1.63 | 3500 | |
| Xanthone film | 60 | 10 | 0.1 | 6000 | |
| Polyimide film | 75 | 10 | 0.01 | 850 | |
| Polyimide asym. film | 60 | 10 | 0.22 | 280 | |

Table 2 shows the feed solution temperature, water concentration in feed solution, total permeation flux (Q), and separation factor ( $\alpha$ ).

For comparison, the published data of Chitosan film, polyimide film (made by Ube Industries Ltd.), and cellulosic film (made by Hitachi Zosen Corporation) are also shown in Table 2.

It is apparent from Table 2 that the membrane for liquid mixture separation of the present invention lets water vapor permeate more selectively than the conventional one and thus it permits efficient separation of water-ethanol mixture.

5

Table 2

| Membrane for separation | Feed temperature (°C) | Water concentration in feed solution (wt%) | Q (kg/m$^2$·h) | α (no dimension) | Remarks |
|---|---|---|---|---|---|
| A-type zeolite film | 105 | 10 | 7.7 | 1200 | Example |
| Chitosan film | 40 | 10 | 0.019 | 124 | Comparative Example |
| Polyimide film | 110 | 6 | 1.5 | 350 | |
| Cellulosic film | 50 | 10 | 1.0 | 750 | |

Example 6 (Application)

The membrane for liquid mixture separation prepared in Example 1 was applied to the pervaporation in the same manner as in Example 5. Various water-organic mixtures as shown in Table 3 were fed at a flow rate of 30-37 cm3/min and the feed solution temperature was varied as shown in Table 3.

Table 3 shows the water concentration in discharge solution, the water concentration in feed solution, the permeation flow flux of water ($q_w$), the permeation flow flux of organic component ($q_0$), and the separation factor ( α ) calculated in the same manner as in Example 5.

It is apparent from Table 3 that the membrane for liquid mixture separation of the present invention can be applied to mixtures of water and a variety of organic components with high selectivity of water permeation.

Table 3

| Water-organic solvent mixture | Permeation temperature (°C) | Water concentration (wt%) | | | | $q_w$ (kg/m²·h) | $q_0$ (kg/m²·h) | α (no dimension) |
|---|---|---|---|---|---|---|---|---|
| | | In feed solution (average) | In feed solution (minimum) | In discharge solution | In permeated solution | | | |
| Water-ethanol | 75 | 10.30 | 9.93 | 9.56 | 99.91 | 2.150 | 0.002 | 10000 |
| | 75 | 5.07 | 4.89 | 4.72 | 99.88 | 1.095 | 0.001 | 16000 |
| Water-methanol | 50 | 10.19 | 10.03 | 9.88 | 99.57 | 0.568 | 0.002 | 2100 |
| | 50 | 5.45 | 5.34 | 5.23 | 99.30 | 0.231 | 0.002 | 2500 |
| Water-acetone | 50 | 10.08 | 10.01 | 9.95 | 99.84 | 0.906 | 0.001 | 5600 |
| | 50 | 4.95 | 4.81 | 4.67 | 99.71 | 0.828 | 0.002 | 6800 |
| Water-dioxane | 60 | 10.00 | 9.70 | 9.40 | >99.9 | >0.872 | <0.002 | >9300 |
| Water-DMF | 60 | 10.50 | 10.30 | 10.10 | >99.9 | >0.951 | <0.001 | >8700 |

Example 7 (Application)

The membrane for liquid mixture separation prepared in Example 1 was applied to the vapor permeation in the same manner as in Example 6. Various water-organic mixtures as shown in Table 4 were fed at a flow rate of 30-37 cm3/min and the feed solution temperature was varied as shown in Table 4.

Table 4 shows the water concentration in discharge vapor, the water concentration in permeated vapor, the permeation flow flux of water vapor ($q_w$), the permeation flow flux of organic component vapor($q_0$), and the separation factor ( $\alpha$ ) calculated in the same manner as in Example 5.

It is apparent from Table 4 that the membrane for liquid mixture separation of the present invention can be applied to mixtures of water vapor and vapor of various organic components with high selectivity of water vapor permeation.

Table 4

| Water-organic solvent mixture | Permeation temperature (°C) | Water concentration (wt%) | | | | $q_w$ (kg/m²·h) | $q_o$ (kg/m²·h) | α (no dimension) |
|---|---|---|---|---|---|---|---|---|
| | | In feed solution (average) | In feed solution (minimum) | In discharge solution | In permeated solution | | | |
| Water-ethanol | 105 | 11.2 | 10.7 | 10.3 | 99.91 | 7.646 | 0.007 | 9200 |
| Water-methanol | 105 | 11.0 | 10.4 | 9.8 | 99.65 | 4.142 | 0.015 | 2500 |
| Water-dioxane | 105 | 10.6 | 10.1 | 9.7 | >99.9 | >7.791 | <0.008 | >8900 |

## Claims

1. A membrane for liquid mixture separation which is composed of an A-type zeolite film deposited on a porous support.

9

2. A membrane as defined in Claim 1, wherein the porous support has an average pore diameter of 0.05-10 $\mu$m and a porosity of 10-60%.

3. A membrane as defined in Claim 1, wherein the porous support is made of any of alumina, silica, zirconia, silicon nitride, silicon carbide, aluminum, silver, stainless steel, polyethylene, polypropylene, polytetrafluoroethylene, polysulfone, and polyimide.

4. A membrane as defined in Claim 1, wherein the porous support is an alumina porous support with an average pore diameter of 0.1-2 $\mu$m and a porosity of 30-50%.

5. A membrane as defined in Claim 1, wherein the A-type zeolite film is prepared in deposition on the porous support as the result of hydrothermal synthesis of silica and alumina source, the starting materials.

6. A membrane as defined in Claim 5, wherein the starting materials contain the constituents in the following molar ratios.
$$H_2O/Na_2O = 20\text{-}300$$
$$Na_2O/SiO_2 = 0.3\text{-}2$$
$$SiO_2/Al_2O_3 = 2\text{-}6$$

7. A membrane as defined in Claim 1, wherein the A-type zeolite is deposited on both sides of a porous support with the thickness of the A-type zeolite film 10-50 $\mu$m and the membrane has a total thickness of about 0.5-2 mm (including the thickness of the support).

8. A membrane as defined in Claim 1, which is used for separation of liquid mixtures by the pervaporation method or vapor permeation method.

9. A membrane as defined in Claim 8, which is used for separation of water-alcoholic hydrocarbon mixtures.

10

# FIG.1

FIG. 2

FIG. 3

# FIG.4